# FASCICULE DE BREVET EUROPEEN

(11) **EP 0 416 003 B1**
(45) Date de publication et mention de la délivrance du brevet: **11.08.1993**
(21) Numéro de dépôt: 89906373.9
(22) Date de dépôt: 24.05.1989
(51) Int. Cl.: B23Q 1/16

(54) **TETE REVOLVER POUR MACHINE-OUTIL**
REVOLVER FÜR WERKZEUGMASCHINEN
REVOLVING HEAD FOR MACHINE TOOL

(30) Priorité: 25.05.1988 FR 8807142
(43) Date de publication de la demande: 13.03.1991
(73) Titulaire: SOMEX MULHOUSE S.A., F-68069 Mulhouse Cedex (FR)
(72) Inventeur: BUESSINGER, Pierre, Wintzenheim F-68000 Colmar (FR)
(74) Mandataire: Nithardt, Roland
(86) Numéro de dépôt international: FR8900247
(87) Numéro de publication internationale: WO8911376

(56) Documents cités:
- DE-A- 2 739 087
- FR-A- 2 080 951
- FR-A- 2 243 757
- FR-A- 2 526 343
- GB-A- 1 025 019
- US-A- 2 915 922
- US-A- 2 956 454

## Description

La présente invention concerne une tête rèvolver pour machine-outil comportant un bâti fixe, une tourelle porte-broche mobile en rotation par rapport à ce bâti, au moins deux broches porte-outil montées sur ladite tourelle, des moyens d'entraînement en rotation desdites broches comprenant un arbre d'entraînement et des moyens de commande automatique de déplacement de ladite tourelle, dans lequel la tourelle comprend un premier élément solidaire dudit bâti et un second élément mobile par rapport au premier élément, dans lequel lesdits moyens de commande automatique comportent un piston axial et un piston rotatif pour déplacer respectivement axialement et en rotation ledit second élément de la tourelle par rapport audit premier élément, et dans laquelle l'axe de l'arbre d'entraînement forme un angle de 45° avec l'axe de la tourelle.

On connaît déjà divers types de tête rèvolver, à commande manuelle ou automatique, qui ne donnent généralement pas satisfaction sur des unités d'usinage du type classique ou à commande numérique, notamment celles qui sont décrites dans la demande de brevet français FR-A-2 080 951 et dans le brevet américain US-A-2 915 922. On notera que ces deux systèmes se distinguent fondamentalement de celui de l'invention par leur principe et par leur construction. En effet, dans les têtes révolver de l'art antérieur, les outils sont fixes, de sorte que l'usinage implique obligatoirement l'entraînement des pièces à usiner. Dans le dispositif de l'invention, les outils sont entraînés en rotation et les pièces sont fixes. De ce fait, les dispositifs connus ne permettent pas d'accomplir les tâches accomplies par la tête rèvolver de l'invention et ne présentent pas la même souplesse d'utilisation et la même fiabilité.

La demande de brevet français FR-A-2 526 343 décrit un tour automatique revolver multibroche comportant un porte-broches présentant les caractéristiques du préambule de la revendication principale 1 à l'exception des moyens de commande automatique de déplacement de la tourelle.

Aucun document relevé dans l'art antérieur ne décrit, ni ne suggère la construction particulière du piston axial évitant tout risque en cas de chute accidentelle de la pression hydraulique.

La présente invention se propose de pallier ces inconvénients en offrant une tête revolver du type mentionné ci-dessus, caractérisée en ce que le piston axial comporte une tige solidaire du premier élément de la tourelle et dudit bâti fixe, et un corps comprenant un capuchon solidaire dudit second élément de la tourelle, et mobile axialement et en rotation par rapport à ladite tige, et en ce qu'elle comporte un organe-ressort de compression monté entre la base du piston et le second élément de la tourelle, cet organe-ressort étant agencé pour ramener ledit second élément en appui contre ledit premier élément de la tourelle après un déplacement axial relatif de ces deux éléments.

L'organe-ressort de compression est de préférence monté en partie dans une première cavité annulaire ménagée à la base du piston et en partie dans une seconde cavité annulaire ménagée dans ledit second élément de la tourelle, ces deux cavités annulaires étant disposées coaxialement par rapport à ladite tige dans le prolongement l'une de l'autre. Il est constitué de façon avantageuse par un empilement de rondelles de Belleville.

Selon une forme de réalisation particulièrement avantageuse, le piston rotatif est monté à l'extrémité de la tige et est logé à l'intérieur d'une chambre de forme cylindrique.

Le piston axial peut comporter au moins un évidement, ledit second élément de la tourelle portant au moins une goupille agencée pour se loger dans ledit évidement, et ces deux composants étant agencés pour rendre solidaire ledit piston axial, lui-même solidaire de la tige, dudit second élément de la tourelle lorsque celle-ci est décalée axialement par rapport audit premier élément.

Les moyens d'entraînement des broches comportent de préférence un pignon d'entraînement denté solidaire d'un arbre d'entraînement, ce pignon denté comportant une partie cylindrique et une partie tronconique, et un pignon d'entraînement solidaire d'un arbre d'entraînement d'une broche qui est toujours en prise au moins avec la partie tronconique du pignon d'entraînement de l'arbre d'entraînement.

Dans cette forme de réalisation. les génératrices de ladite partie tronconique forment avec l'axe de la roue un angle de 45°, et sont parallèles avec l'axe de la tige.

La partie tronconique et la partie cylindrique du pignon d'entraînement, sont avantageusement appuyées l'une contre l'autre par un organe ressort pour être couplées. Cet organe ressort est de préférence constitué par un empilement de rondelles de' Belleville.

Selon une autre forme de réalisation avantageuse, la tête rèvolver comporte un multicontacteur logé dans une cavité ménagée dans le bâti, ce multicontacteur étant agencé pour commander les fonctions électriques de cette tête, et au moins deux tiges de commande correspondant respectivement auxdites broches porte-outil, et associées à des goupilles de commande correspondant respectivement à chacune des broches et agencées pour actionner ledit multicontacteur par l'intermédiaire d'une desdites tiges de commande.

La présente invention sera mieux comprise en référence à la description d'un exemple de réalisation et du dessin annexé dans lequel :
La figure 1 représente une vue en perspective d'une forme de réalisation préférée de la tête revolver de l'invention,
la figure 2 représente une vue en coupe axiale de la tête revolver représentée par la figure 1,
la figure 3 représente la tête revolver selon l'invention, partiellement coupée et vue selon une direction indiquée par la flèche F,
la figure 4 représente une vue en perspective d'une forme de réalisation où la tourelle porte six broches porte-outil, et
la figure 5 illustre une vue de dessous de la tête rèvolver illustrée par la figure 4.

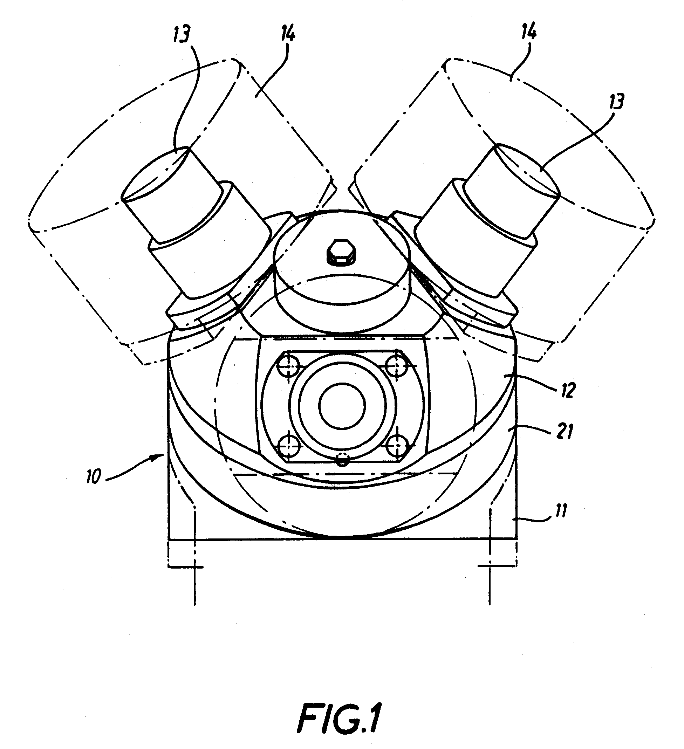

En référence à la figure 1, la tête revolver pour machine-outil 10 représentée comporte essentiellement un bâti fixe 11 sur lequel est adaptée une tourelle 12 porte-broches qui, comme son nom l'indique, porte par exemple trois broches porte-outil 13 disposées à 120° l'une de l'autre. Les broches 13 pourraient être remplacées par des adaptations 14 du type multibroche connues en soi. Il est bien entendu que le nombre de broches ou d'adaptations multibroches n'est pas limité à trois, bien que cette construction soit avantageuse dans certains cas pour des raisons d'encombrement.

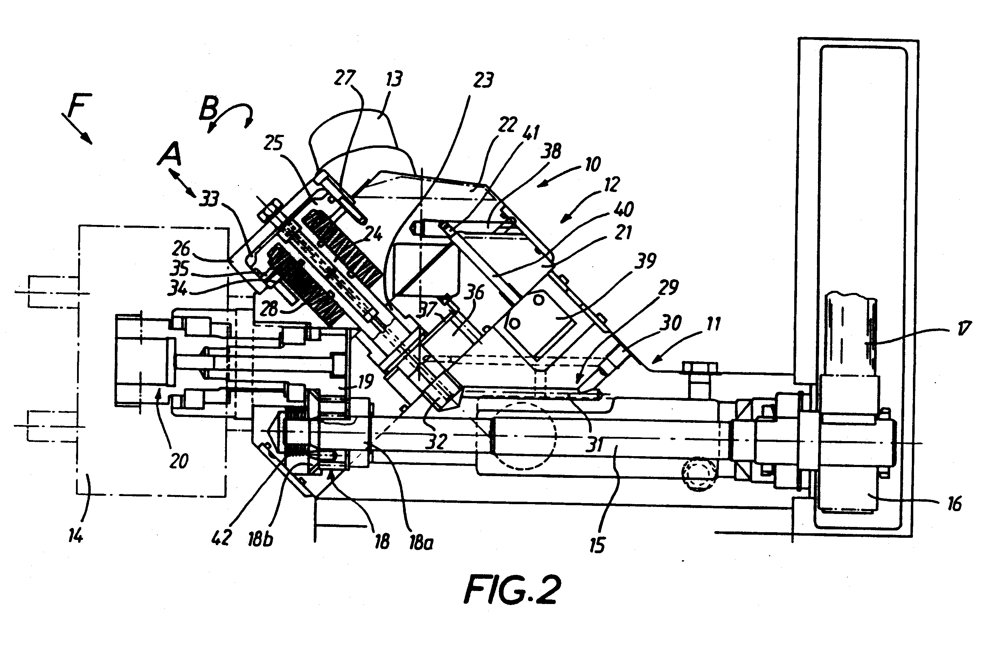

La figure 2 représente une vue en coupe détaillée de la tête revolver 10. Le bâti fixe 11, de forme coudée à 90°, contient essentiellement l'arbre d'entraînement 15 portant à son extrémité éloignée de la tourelle une roue ou un pignon d'entraînement 16 sur lequel passe une courroie 17 et à son autre extrémité un pignon d'entraînement 18 qui peut engrener un pignon d'entraînement 19 solidaire de la tête porte-outil 20 de la broche 13.

La tourelle 12 est disposée par rapport au bâti, de telle manière que son axe fasse avec l'aie de l'arbre d'entraînement 15, un angle de 45°.

Cette disposition particulièrement avantageuse permet un dégagement optimal des broches ou multibroches par rapport à celle qui se trouve en position d'usinage et qui est parallèle à l'arbre d'entraînement.

En outre, les efforts d'usinage sont absorbés de façon idéale, ce qui n'est pas le cas des autres broches connues qui subissent un couple de renversement lorsqu'elles sont en position d'usinage.

La tourelle 12 peut se déplacer par rapport au bâti fixe 11 selon un mouvement axial illustré par la flèche double A et selon un mouvement rotatif illustré par la double flèche B. A cet effet, la tourelle se compose de deux éléments respectivement 21 et 22, dont le premier 21 est solidaire du bâti fixe et dont le deuxième 22, en forme de couvercle, s'emboîte en partie sur ledit premier élément. Le premier élément 21, qui est rigidement fixé au bâti fixe 11, porte un manchon ou fourrure 23 à l'intérieur duquel peut tourner autour de son axe une tige cylindrique 24 à l'extrémité supérieure de laquelle est fixé un piston axial 25, dont le rôle sera expliqué par la suite. Le piston 25 est logé dans une chambre ménagée à l'intérieur d'un capuchon 26 de forme sensiblement cylindrique, qui est fixé au second élément 22 de la tourelle au moyen de vis ou boulons 27. Un ressort de compression 28, composé de préférence d'un empilement de rondelles de Belleville, est logé partiellement dans une première cavité annulaire ménagée à la base du piston 25, coaxiale par rapport à la tige 24, et partiellement dans une seconde cavité annulaire prolongeant la précédente et ménagée dans le second élément 22 de la tourelle coaxialement par rapport à cette même tige 24.

Le bâti fixe 11 est équipé d'un conduit 29 comprenant une embouchure 30 et une tubulure linéaire 31 qui débouche dans un conduit axial 32 ménagé à travers la tige 24 et le piston 25 pour déboucher dans une chambre de pression 33 ménagée entre le piston 25 et la paroi intérieure du capuchon 26.

Lorsque l'on injecte un fluide sous pression dans l'embouchure 30, la pression du fluide hydraulique qui est transmise par les conduits 31 et 32 se manifeste dans la chambre 33, ce qui a pour effet de déplacer le capuchon 26 par rapport au piston 25. Etant donné que le capuchon 26 est rendu solidaire du second élément 22 de la tourelle par les boulons 27, ce deuxième élément se soulève par rapport au premier élément 21 en comprimant le ressort 28, du fait de l'écrasement des rondelles de Belleville dont il est constitué. Le second élément 22 de la tourelle est par ailleurs équipé d'au moins une goupille ou d'un boulon 34 dont la tête pénètre dans une cavité 35 ménagée a la base du piston axial 25 et dont le but est de rendre momentanément solidaires ledit second élément de la tourelle et ledit piston. Dans cette position, le piston peut servir d'élément moteur destiné à entraîner la tourelle en rotation selon un mouvement qui sera décrit plus en détail ci-dessous.

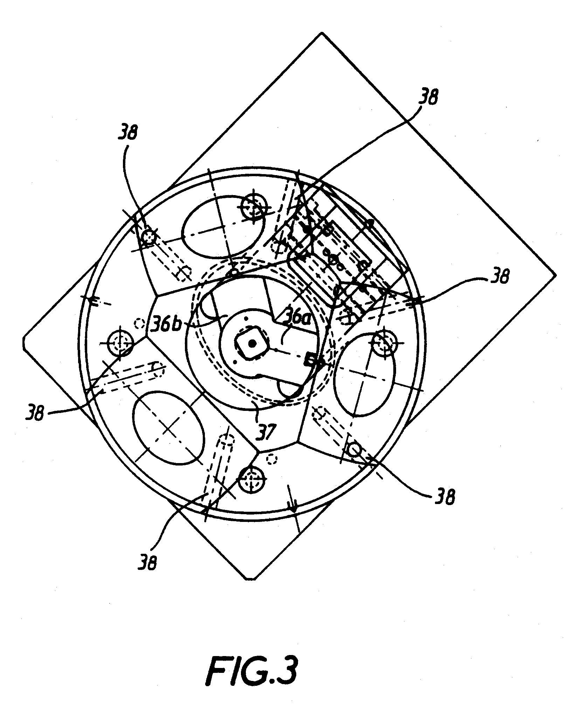

La tige 24, qui est solidaire du piston 25, porte à son extrémité inférieure un piston rotatif 36 logé dans une chambre cylindrique 37 ménagée dans le premier élément 21 de la tourelle. Ce piston rotatif peut, comme le montre plus particulièrement la figure 3, être amené en butée dans deux positions différentes respectivement 36a et 36b, selon que l'on injecte du fluide hydraulique d'un côté ou de l'autre de ce piston rotatif dans la chambre 37. Etant donné que le piston rotatif 36 est solidaire du piston 25, par l'intermédiaire de la tige 24 et que ce dernier est momentanément rendu solidaire, par au moins une goupille 34, du second élément 22 de la tourelle, cette dernière peut tourner d'un angle de 120° pour permuter les broches. Lorsque l'on relâche la pression dans la chambre de pression 33, le capuchon 26 revient dans sa position initiale, poussé par le ressort 28, ce qui dégage la tête de la ou des goupilles 34 de l'évidement correspondant 35 et désolidarise le piston 25 du second élément 22 de la tourelle. Par une injection appropriée de fluide sous pression, on ramène le piston rotatif 36 dans sa position initiale, ce qui le rend prêt pour un nouveau cycle de travail permettant de faire tourner la tourelle, ou plus exactement la seconde partie 22 de la tourelle, d'un angle de 120° (dans le cas où la tourelle porte trois broches porte-outil) par rapport à la première partie 21 de cette tourelle ou du bâti fixe.

Le pignon d'entraînement 18 des moyens d'entraînement des broches comprend une première partie 18a cylindrique et une seconde partie 18b tronconique formée à l'extrémité antérieure de cet organe. En fonctionnement normal, la partie cylindrique engrène le pignon d'entraînement 19. Lorsque l'on soulève la tourelle, c'est-à-dire lorsque l'on déplace, comme décrit précédemment la seconde partie 22 axialement par rapport à la première partie 21 de cette tourelle, le pignon 19 reste en prise avec le pignon 18 grâce à l'existence de la partie tronconique 18b dont l'angle est de 45°. Cette forme de réalisation permet d'assurer un indexage précis des roues d'entraînement. A cet effet, la partie tronconique 18b est en appui contre la partie cylindrique 18a grâce à un ressort de compression 42 constitué par des rondelles de Belleville empilées. Le ressort a pour objet d'absorber les contraintes momentanées pouvant s'exercer sur les dents si, lors d'un changement de broche, les dents du pignon 19 tombent en face des dents du pignon 18, et d'éviter ainsi un blocage de l'entraînement, voire un endommagement des pignons.

En référence à la figure 3, des goupilles d'indexage 38, disposées entre deux surfaces correspondantes du premier et du second élément de la tourelle, permettent d'indexer d'une manière précise ce second élément 22 par rapport au premier élément de cette tourelle.. Dans le cas d'une tourelle portant trois broches, les goupilles sont au nombre de six et sont décalées de 60°. Ces goupilles pourraient également être remplacées par des éléments en relief de l'un des éléments s'engageant dans des cavités complémentaires de l'autre élément.

Un multicontacteur 39 permet d'assurer les commandes électriques du dispositif. Ce multicontacteur est logé dans une cavité ménagée dans le bâti. Il est associé à au moins deux tiges 40 de commande correspondant respectivement auxdites broches porte-outil, dont chacune porte par exemple une goupille de commande 41 qui est destinée à agir sur une des tiges de commande 40 pour actionner l'un des contacts du multicontacteur.

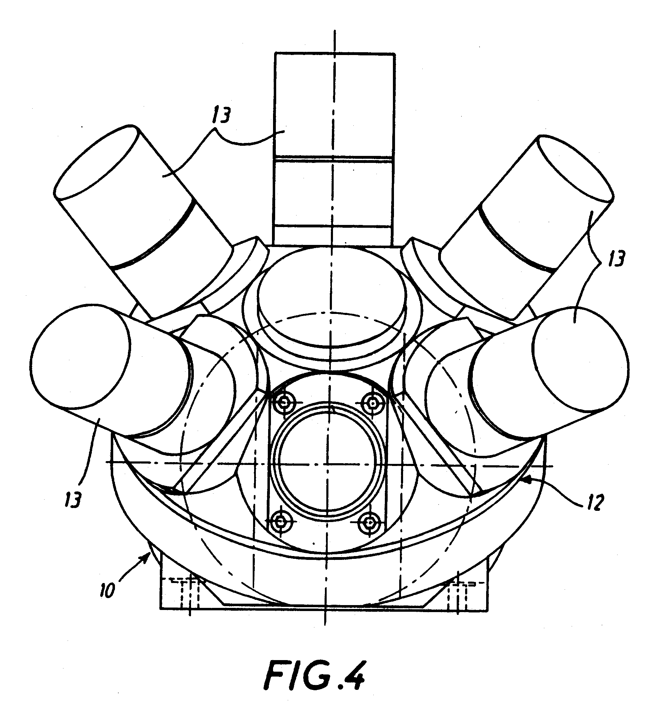

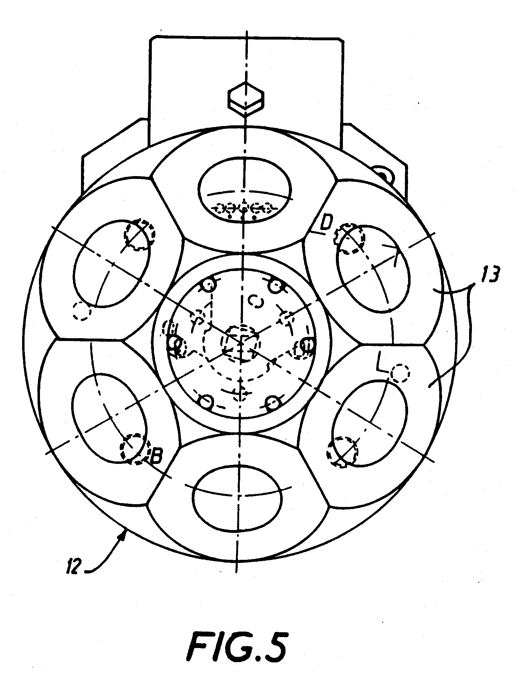

Les figures 4 et 5 illustrent une variante selon laquelle la tourelle 12 de la tête rèvolver 10 porte six broches porte-outils 13 qui sont montées à 60° l'une de l'autre. Comme précédemment, ces broches pourraient être remplacées par des éléments d'adaptation multibroches. La construction de cette réalisation est basée sur les mêmes principes que ceux qui sont mis en oeuvre pour la réalisation de la tête rèvolver selon les figures précédentes. L'angle de rotation de la tête pour passer d'une broche à une autre est de 60°. La présence de six broches augmente la souplesse de la machine et accroît ses capacités. Le mécanisme d'entraînement des broches reste similaire à celui décrit précédemment.

Parmi les éléments originaux et les avantages de la présente invention, on peut noter :
- le principe particulièrement efficace d'un système de synchronisation réalisé de manière très simple par la combinaison des deux parties du pignon d'entraînement 18 couplées grâce à un ressort de compression,
- la présence, dans le bâti, du multicontacteur logé dans un boîtier étanche et dont les contacts sont commandés par des tiges et des goupilles de commande,
- la simplicité d'un éventuel remplacement du multicontacteur 39 qui ne nécessite aucun réglage sur la machine, ce dernier pouvant être effectué en usine,
- l'indexation de la tourelle sur des goupilles, ce qui autorise de tès fortes sollicitations radiales en cours d'utilisation des broches,
- la position indexée de la tourelle assurée mécaniquement par des rondelles de Belleville, ce qui évite tout risque en cas de chute accidentelle de la pression hydraulique,
- l'extrême simplicité du circuit hydraulique qui comporte un piston axial et un piston rotatif et ne nécessite qu'une petite centrale hydraulique de très faible capacité. Ce circuit assure, en 1,5 secondes, le soulèvement de la tourelle pour désindexer les goupilles 38, craboter le piston 25 dans la goupille 34 et désengager le pignon 19, qui assure la rotation de 60° ou de 120° de la tourelle. La chute de la pression hydraulique permet, par les rondelles de Belleville de réindexer les goupilles 38, de désindexer le piston 25, ce qui permet au piston rotatif 36 de reprendre sa position initiale,
- toutes les pièces mécaniques en mouvement sont plongées dans un bain d'huile ce qui permet à cette tête de s'implanter soit verticalement soit horizontalement.

## Revendications

1. Tête revolver pour machine-outil, comportant un bâti fixe, une tourelle porte-broches mobile en rotation par rapport à ce bâti, au moins deux broches porte-outil montées sur ladite tourelle, des moyens d'entraînement en rotation desdites broches comprenant un arbre d'entraînement (**15**) et des moyens de commande automatique de déplacement de ladite tourelle, dans lequel la tourelle (**12**) comprend un premier élément (**21**) solidaire dudit bâti (**11**) et un second élément (**22**) mobile par rapport au premier élément, dans lequel lesdits moyens de commande automatique comportent un piston axial (**25**) et un piston rotatif (**36**) pour déplacer respectivement axialement et en rotation ledit second élément (**22**) de la tourelle (**12**) par rapport audit premier élément (**21**), dans laquelle l'axe de l'arbre d'entraînement (**15**) forme un angle de 45° avec l'axe de la tourelle (**12**), caractérisé en ce que le piston axial comporte une tige (**24**) solidaire du premier élément (**21**) de la tourelle et dudit bâti fixe (**11**), et un corps comprenant un capuchon (**26**) solidaire dudit second élément (**22**) de la tourelle et mobile axialement et en rotation par rapport à ladite tige, et en ce qu'elle comporte un organe ressort de compression (**28**) monté entre la base du piston (**25**) et ledit second élément (**22**) de la tourelle, cet organe ressort étant agencé pour ramener ledit second élément (**22**) en appui contre ledit premier élément (**21**) de la tourelle après un déplacement axial relatif de ces deux éléments.

2. Tête revolver selon la revendication 1, caractérisée en ce que ledit organe ressort de compression (**28**) est monté en partie dans une première cavité annulaire ménagée à la base du piston (**25**) et en partie dans une seconde cavité annulaire ménagée dans ledit second élément (**22**) de la tourelle (**12**), ces deux cavités annulaires étant disposées coaxialement par rapport à ladite tige (**24**) dans le prolongement l'une de l'autre.

3. Tête revolver selon la revendication 4, caractérisée en ce que l'organe ressort de compression (**28**) est constitué par un empilement de rondelles de Belleville.

4. Tête revolver selon la revendication 1, caractérisée en ce que le piston rotatif (**36**) est monté à l'extrémité de la tige (**24**) et est logé à l'intérieur d'une chambre de forme cylindrique (**37**).

5. Tête revolver selon la revendication 1, caractérisée en ce que le piston axial (**25**) comporte au moins un évidement (**35**) et en ce que ledit second élément (**22**) de la tourelle porte au moins une goupille (**34**) agencée pour se loger dans le ou lesdits évidements (**35**), ces deux composants étant agencés pour rendre solidaire ledit piston axial (**25**), lui-même solidaire de la tige (**24**), dudit second élément (**22**) de la tourelle lorsque celle-ci est décalée axialement par rapport audit premier élément (**21**).

6. Tête revolver selon la revendication 1, caractérisée en ce que les moyens d'entraînement des broches comportent un pignon d'entraînement denté (**18**) solidaire d'un arbre d'entraînement (**15**), ce pignon denté comportant une partie cylindrique (**18a**) et une partie tronconique (**18b**), et un pignon d'entraînement denté (**19**) solidaire d'un arbre d'entraînement d'une broche (**20**) qui est toujours en prise au moins avec la partie tronconique du pignon d'entraînement de l'arbre d'entraînement.

7. Tête revolver selon la revendication 6, caractérisée en ce que les génératrices de ladite partie tronconique (**18b**) forment avec l'axe du pignon un angle de 45°, et sont parallèles à l'axe de la tige (**24**).

8. Tête revolver selon la revendication 6, caractérisée en ce que la partie tronconique (**18b**) et la partie cylindrique (**18a**) du pignon d'entraînement, sont appuyées l'une contre l'autre par un organe ressort (**42**) pour être couplées.

9. Tête revolver selon la revendication 8, caractérisée en ce que l'organe ressort (**42**) est constitué par un empilement de rondelles de Belleville.

10. Tête revolver selon la revendication 1, caractérisée en ce qu'elle comporte un multicontacteur (**39**) logé dans une cavité ménagée dans le bâti, ce multicontacteur étant agencé pour commander les fonctions électriques de cette tête, et au moins deux tiges de commande (**40**) correspondant respectivement auxdites broches porte-outil, et associées à des goupilles de commande (**41**) correspondant respectivement à chacune des broches et agencées pour actionner ledit multicontacteur (**39**) par l'intermédiaire d'une desdites tiges de commande.

## Claims

1. Revolving head for machine tool, including a stationary frame, a mobile toolhead turret which rotates with respect to this frame, at least two toolhead spindles mounted on said turret, a system for driving the rotation of said spindles including a drive shaft (15) and an automatic control system for traverse motion of said turret, in which the turret (12) includes a first part (21) of a piece with said frame (11) and a second part (22) which is mobile with respect to the first part, in which the said automatic control system includes an axial piston (25) and a rotating piston (36) for driving the said second part (22) of the turret (12) axially and in rotation respectively with respect to the said first part (21), in which the axis of the drive shaft (15) forms an angle of 45° with the axis of the turret (12), characterized in that the axial piston includes a rod (24) which is of a piece with the first part (21) of the turret and of said stationary frame (11), and a body including a cap (26) of a piece with the second part (22) of the turret, and mobile axially and in rotation with respect to the said rod, and in that it includes a compression spring component (28) mounted between the base of the piston (25) and the said second part (22) of the turret, this spring component being designed to bring the said second part (22) up against the said first part (21) of the turret after an axial movement relative to these two parts.

2. Revolving head according to claim 1, characterized in that said compression spring component (28) is mounted partly in a first ring-shaped cavity hollowed out of the base of the piston (25) and partly in a second ring-shaped cavity hollowed out of the said second part (22) of the turret (12), these two ring-shaped cavities being placed coaxially with respect to the said rod (24) as extensions of each other.

3. Revolving head according to claim 4, characterized in that the compression spring component (28) is made up of a pile of Belleville spring washers.

4. Revolving head according to claim 1, characterized in that the rotating piston (36) is mounted at the end of the rod (24) and is lodged inside a cylindrically shaped chamber (37).

5. Revolving head according to claim 1, characterized in that the axial piston (25) includes at least one recess (35) and in that the said second part (22) of the turret carries at least one pin (34) fitted so as to lodge in the said recess or recesses (35), these two components being designed to make the said axial piston (25), which is of a piece with the rod (24), of the said second part (22) of the turret when the turret is axially displaced with respect to the first part (21).

6. Revolving head according to claim 1, characterized in that the system driving the spindles including a cogged drive pinion (18) of a piece with a drive shaft (15), this cogged pinion including a cylindrical part (18a) and a truncated part (18b), and a cogged drive pinion (19) of a piece with a drive shaft of a spindle (20) which is always in mesh at least with the truncated part of the drive pinion of the drive shaft.

7. Revolving head according to claim 6, characterized in that the generating lines of the said truncated part (18b) form an angle of 45° with the axis of the pinion, and are parallel to the axis of the rod (24).

8. Revolving head according to claim 6, characterized in that the truncated part (18b) and the cylindrical part (18a) of the drive pinion are kept in contact with each other by a spring component (42) and thus coupled.

9. Revolving head according to claim 8, characterized in that the spring component (42) is made up of a pile of Belleville spring washers.

10. Revolving head according to claim 1, characterized in that it includes a multicontact switch (39) lodged in a cavity hollowed out of the frame, this multicontact switch being designed to control the electrical operations of this head, and at least two control rods (40) corresponding respectively to the said toolhead spindles, and associated with control pins (41) corresponding respectively to each of the spindles and designed to activate the said multicontact switch (39) through one of the said control rods.

## Patentansprüche

1. Revolver für Werkzeugmaschinen, bestehend aus einem festen Gestell, einem sich im Verhältnis zu diesem Gestell drehenden, mobilen Meißelhalter, mindestens zwei auf dem besagten Meißelhalter angeordneten Werkzeugträgerspindeln, Drehantriebsmitteln der besagten Spindeln mit einer Antriebswelle (15) und Steuermitteln zum automatischen Verfahren des besagten Meißelhalters, wobei der Meißelhalter (12) ein erstes Element (21) aufweist, das mit dem besagten Gestell (11) schlüssig ist, sowie ein zweites, im Verhältnis zum Ersten mobiles Element (22), wobei die besagten Automatiksteuermittel einen Axialkolben (25) und einen Drehkolben (36) aufweisen, um jeweils das besagte zweite Element (22) des Meißelhalters (12) im Verhältnis zum besagten ersten Element (21) in axialer und in Drehrichtung zu verschieben, wobei die Achse der Antriebswelle (15) mit der Achse des Meißelhalters (12) einen Winkel von 45° bildet, dadurch gekennzeichnet, daß der Axialkolben über eine mit dem ersten Element (21) des Meißelhalters und des besagten festen Gestells (11) schlüssige Stange (24) verfügt, sowie über einen Körper mit einem Verschluß (26), der mit dem besagten zweiten Element (22) des Meißelhalters schlüssig und im Verhältnis zur besagten Stange in axialer und Drehrichtung mobil ist, und daß er ein Druckfederorgan (28) aufweist, daß zwischen der Kolbenbasis (25) und dem besagten zweiten Element (22) des Meißelhalters angeordnet ist, wobei dieses Federorgan so ausgelegt ist, daß es das besagte zweite Element (22) gegen das besagte erste Element (21) des Meißelhalters drückt, nach einer relativen Axialverschiebung dieser beiden Elemente.

2. Revolver gemäß Anspruch 1, dadurch gekennzeichnet, daß das besagte Druckfederorgan (28) teilweise in einer ersten ringförmigen Vertiefung an der Basis des Kolbens (25) angeordnet ist, und teilweise in einer zweiten ringförmigen Vertiefung im besagten zweiten Element (22) des Meißelhalters (12), wobei diese beiden ringförmigen Vertiefungen im Verhältnis zur besagten Stange (24) koaxial verlaufen, innerhalb ihrer jeweiligen Verlängerung.

3. Revolver gemäß Anspruch 4, dadurch gekennzeichnet, daß das Druckfederorgan (28) aus einem Stapel von Belleville-Dichtungsringen besteht.

4. Revolver gemäß Anspruch 1, dadurch gekennzeichnet, daß der Drehkolben (36) am Ende der Stange (24) angeordnet ist und sich innerhalb einer zylinderförmigen Kammer (37) befindet.

5. Revolver gemäß Anspruch 1, dadurch gekennzeichnet, daß der Axialkolben (25) mindestens eine Vertiefung (35) und das besagte zweite Element (22) des Meißelhalters mindestens einen Stift (34) aufweisen, der sich in die besagte(n) Vertiefung(en) (35) einfügt, wobei diese beiden Bestandteile angeordnet sind, um den besagten Axialkolben (25) schlüssig zu machen, der seinerseits mit der Stange (24) des besagten zweiten Elements (22) des Meißelhalters schlüssig ist, wenn er im Verhältnis zum besagten ersten Element (21) axial verschoben ist.

6. Revolver gemäß Anspruch 1, dadurch gekennzeichnet, daß die Ahtriebsmittel der Spindeln ein mit der Antriebswelle (15) schlüssiges Zahnantriebsritzel (18) aufweisen, wobei dieses Zahnritzel ein zylinderförmiges Teil (18a) und ein kegelstumpfartigen Teil (18b) aufweist, sowie ein mit einer Antriebswelle einer Spindel (20) schlüssiges Zahnantriebsritzel (19), die immer mit zumindest dem kegelstumpfartigen Teil des Antriebsritzels der Antriebswelle in Verbindung steht.

7. Revolver gemäß Anspruch 6, dadurch gekennzeichnet, daß die Erzeugenden des besagten kegelstumpfartigen Teils (18b) mit der Achse des Ritzels einen Winkel von 45° bilden und parallel zur Stangenachse (24) verlaufen.

8. Revolver gemäß Anspruch 6, dadurch gekennzeichnet, daß das kegelstumpfartige Teil (18b) und das zylinderförmige Teil (18a) des Antriebsritzels von einem Federorgan (42) gegeneinander gedrückt werden, um gekoppelt zu werden.

9. Revolver gemäß Anspruch 8, dadurch gekennzeichnet, daß das Federorgan (42) aus einem Stapel von Belleville-Dichtungsringen besteht.

10. Revolver gemaß Anspruch 1, dadurch gekennzeichnet, daß er einen Mehrfachschütz (39) umfaßt, der in einer im Gestell vorgesehenen Vertiefung angeordnet ist, wobei dieses Mehrfachschütz zur Steuerung der elektrischen Funktionen dieses Revolvers ausgelegt ist, sowie von mindestens zwei Steuerstangen (40), die jeweils den besagten Meißelhaltern zugeordnet sind und mit Steuerstiften (41) in Verbindung stehen, die jeweils einer der Spindeln zugeordnet und so angeordnet sind, daß sie das besagte Mehrfachschütz (39) über eine der besagten Steuerstangen betätigen.
